# EUROPÄISCHE PATENTSCHRIFT

(11) **EP 2 122 590 B1**
(45) Veröffentlichungstag und Bekanntmachung des Hinweises auf die Patenterteilung: **21.06.2017**
(21) Anmeldenummer: 07819293.7
(22) Anmeldetag: 24.10.2007
(51) Int. Cl.: G07F 17/32, G07F 17/34

(54) **ELEKTRONISCHER SPIEL- UND/ODER WETTAUTOMAT**
ELECTRONIC GAMING AND/OR GAMBLING MACHINE
MACHINE DE JEU ET/OU DE PARI ÉLECTRONIQUE

(30) Priorität: 19.01.2007 DE 102007002933
(43) Veröffentlichungstag der Anmeldung: 25.11.2009
(73) Patentinhaber: Novomatic AG, 2352 Gumpoldskirchen (AT)
(72) Erfinder: GRAF, Johann, F., A-2352 Gumpoldskirchen (AT); SVOBODA, Eduard, A-1230 Wien (AT)
(74) Vertreter: Thoma, Michael
(86) Internationale Anmeldenummer: PCT/EP2007/009241
(87) Internationale Veröffentlichungsnummer: WO 2008/086833

(56) Entgegenhaltungen:
- EP-A1- 1 729 204
- WO-A-2006/122358
- JP-A- 2002 195 871
- JP-A- 2005 218 670
- US-A1- 2004 166 937
- US-A1- 2006 287 042
- US-A1- 2007 032 296
- Jan Ozer: "Tutorial: Setting Up Dual-Monitor Editing for Premiere Pro", The Event Videographer's Resource, 5 September 2006 (2006-09-05), pages 1-6, XP055241631, Retrieved from the Internet: URL:http://www.eventdv.net/Articles/News/F eature/Tutorial-Setting-Up-Dual-Monitor-Ed iting-for-Premiere-Pro-37906.htm [retrieved on 2016-01-14]

## Beschreibung

Die vorliegende Erfindung betrifft einen elektronischen Spiel- und/oder Wettautomaten, insbesondere einen münz- und/oder geldwertmäßig betätigbaren Glücksspielautomaten, mit einer Anzeigevorrichtung zur Anzeige von zumindest einem Spiel und ggf. zusätzlichen Informationen, wobei die Anzeigevorrichtung zumindest zwei Bildschirme aufweist, auf denen zumindest eine erste Bildschirmdarstellung, vorzugsweise ein Hauptspiel, und eine zweite Bildschirmdarstellung, vorzugsweise ein Zusatzspiel und/oder Zusatzinformationen, anzeigbar sind, sowie einem Bedienfeld zur Betätigung des Spiel- und/oder Wettautomaten.

Münz- bzw. geldwertmäßig betätigte Glücksspielautomaten sind häufig in Form von Walzenspielautomaten ausgebildet, wobei herkömmlicherweise, wie dies beispielsweise die DE 200 00 990 U1 zeigt, im Sichtfenster des Anzeigefeldes mehrere rotierende Walzen mit verschiedenen Spielsymbolen rotieren und ein Spielgewinn ausgegeben wird, wenn die Walzen mit gleichen Spielsymbolen entlang einer Gewinnlinie stehen bleiben. Unterhalb des Anzeigefeldes ist dabei etwa auf Bauchhöhe des vor dem Spielgerät stehenden Spielers ein Bedienpaneel mit mehreren Bedientasten vorgesehen, die von Hand betätigbar sind und u.a. dazu dienen, die rotierenden Walzen in Betrieb zu setzen bzw. diese anzuhalten.

Anstatt solche mechanischen, tatsächlich rotierenden Walzen zu verwenden, ist es in jüngerer Zeit bekannt geworden, Bildschirme zu verwenden und die rotierenden Walzen graphisch auf dem jeweiligen Bildschirm darzustellen. Einen solchen Glücksspielautomaten mit einer Bildschirmdarstellung des zu spielenden Spieles zeigt beispielsweise die WO 2005/041139, bei dem zwei großflächige, zueinander geneigte Bildschirme vorgesehen sind, auf denen mit dem Spielgerät zu spielende Spiele angezeigt werden können. Die Anordnung zweier Bildschirme bringt eine beträchtliche Erhöhung des Spielreizes und des Unterhaltungsgrades mit sich, da beispielsweise zwei Spiele parallel zueinander gespielt werden können oder auf dem zweiten Bildschirm zusätzliche Informationen betreffend das auf dem anderen Bildschirm laufende Spiel angezeigt werden können. Dabei ist es ebenfalls möglich, auf dem zweiten Bildschirm nicht direkt auf das laufende Spiel bezogene Informationen anzuzeigen, beispielsweise Informationen betreffend zusätzliche Unterhaltungsmöglichkeiten in dem jeweiligen Spielkasino, Speisekarten, Nachrichteneinblendungen etc. Durch die zueinander geneigte Anordnung der Bildschirme kann ein entspannteres Sehen und eine bessere Sichtbarkeit der Bildschirmanzeigen erreicht werden, da die Blickrichtung auf die Bildschirme weniger schräg als bei nicht geneigten Bildschirmanordnungen ist.

Nichtsdestotrotz können auch bei derartigen Geräten Sichtbeeinträchtigungen, beispielsweise durch Lichtreflexe verursacht durch Deckenleuchten oder dergleichen, eintreten. Zudem kann es beispielsweise je nach Körpergröße trotzdem vorkommen, dass ein den jeweiligen Spieler mehr interessierendes Spiel auf einem für ihn schlechter einsehbaren Bildschirm dargestellt wird, wodurch eine Ermüdung des Spielers eintreten kann, was ein Nachlassen des Spielanreizes und der Konzentration mit sich bringen kann. Zudem sind bei Glücksspielautomaten mit übereinander angeordneten Großbildschirmen die gleichzeitig ablaufenden mehreren Spiele in der durch das Bedienpaneel vorgegebenen Spielerposition nicht gleichermaßen optimal verfolgbar.

Ferner ist aus der Schrift JP 2005-218670 ein Spielautomat mit zwei übereinander angeordneten Bildschirmen bekannt, wobei auf dem unteren Hauptdisplay das Hauptspiel dargestellt und auf dem oberen Zusatzbildschirm Zusatzinformationen dargestellt werden. Dabei schlägt die genannte Schrift es vor, Werbeeinblendungen in Form von Popup-Fenstern auf den genannten Hauptbildschirm zu legen, wobei der Gerätebediener die Möglichkeit hat, ein solches Werbefenster aktiv vom Hauptbildschirm wegzuschalten, um bei dem auf dem Hauptdisplay dargestellten Hauptspiel nicht zu stören.

Der vorliegenden Erfindung liegt hiervon ausgehend die Aufgabe zugrunde, einen verbesserten elektronischen Spiel- und/oder Wettautomaten, insbesondere Glücksspielautomaten zu schaffen, der Nachteile des Standes der Technik vermeidet und letzteren in vorteilhafter Weise weiterbildet. Insbesondere soll die Verfolgbarkeit der auf den Bildschirmen dargestellten Spiele in einer ergonomisch günstigen Spielerposition verbessert, die Spielattraktivität des Automaten erhöht und ein ermüdungsfreies, individuell bequemeres Benutzen des Spielautomaten ermöglicht werden.

Erfindungsgemäß wird diese Aufgabe durch einen Spiel- und/oder Wettautomaten gemäß Patentanspruch 1 gelöst. Bevorzugte Ausgestaltungen der Erfindung sind Gegenstand der abhängigen Ansprüche.

Es wird also vorgeschlagen, das Gerät hinsichtlich der Bildschirmdarstellungen auf den mehreren Bildschirmen variabel auszubilden, so dass ein Spieler bzw. Gerätebenutzer die Bildschirmdarstellungen auf den zumindest zwei Bildschirmen des Geräts je nach Gusto verändern kann. Erfindungsgemäß ist eine Umschalteinrichtung, die durch eine Eingabeeinrichtung von einem Gerätebenutzer betätigbar ist, zum Umschalten der eingangs genannten ersten Bildschirmdarstellung von dem ersten Bildschirm auf den zweiten Bildschirm sowie der zweiten Bildschirmdarstellung von dem zweiten Bildschirm auf den ersten oder einen weiteren Bildschirm und/oder umgekehrt vorgesehen. Die mehreren Bildschirme bilden Flipscreens, die es dem Gerätebenutzer erlauben, die Bildschirmdarstellungen zwischen den Bildschirmen hin- und herzuschalten und die Bildschirmdarstellungen auf den Bildschirmen gegeneinander auszutauschen. Läuft beispielsweise ein den jeweiligen Gerätebenutzer mehr interessierendes Spiel auf einem für ihn persönlich schlechter einsehbaren Bildschirm, kann er über die Eingabeeinrichtung die genannte Umschalteinrichtung aktivieren, so dass das genannte Spiel auf einen für ihn besser einsehbaren, anderen Bildschirm geschalten wird, während das dort an sich vorgesehene Spiel bzw. die dort an sich vorgesehene Informationsdarstellung auf den wiederum anderen Bildschirm geschaltet wird. Die umschaltbare Bildschirmdarstellung muss dabei nicht zwangsweise eine Darstellung des vom Automaten angebotenen Spiels sein, sondern kann auch in der Darstellung von Zusatzinformationen bestehen. Will ein Spieler beispielsweise diese Zusatzinformationen genauer lesen, kann die entsprechende Bildschirmansicht vorübergehend auf den für ihn bzw. sie besser einsehbaren Bildschirm gelegt werden.

In Weiterbildung der Erfindung kann der Spiel- bzw. Wettautomat auch mehr als zwei Bildschirme aufweisen, wobei mittels der Umschaltvorrichtung die Bildschirmdarstellungen vorteilhafterweise zwischen den dann drei oder mehr Bildschirmen hin- und hergeschaltet werden können. Das Umschalten der Bildschirmdarstellungen kann hierbei grundsätzlich in verschiedener Art und Weise erfolgen. Beispielsweise kann ein sozusagen ringförmiges Weiterschalten der Bildschirmdarstellungen bewirkt werden dahingehend, dass die Bildschirmdarstellung des ersten Bildschirms auf den zweiten Bildschirm, die Bildschirmdarstellung des zweiten Bildschirms auf den dritten Bildschirm, die Bildschirmdarstellung des dritten Bildschirms auf einen n-ten Bildschirm und schließlich die Bildschirmdarstellung des n-ten Bildschirms auf den ersten Bildschirm geschalten wird. Alternativ oder zusätzlich kann jedoch auch eine hiervon abweichende Umschaltbarkeit der Bildschirmdarstellungen realisiert sein, beispielsweise ein paarweises Hin- und Herschalten der Bildschirmdarstellungen beispielsweise zwischen einem ersten und vierten Bildschirm sowie einem zweiten und dritten Bildschirm. Darüber hinaus können auch weitere Umschaltrichtungen ggf. auch unter Berücksichtigung nicht aller der mehreren Bildschirme vorgesehen sein, beispielsweise dahingehend, dass die Bildschirmdarstellung des ersten auf einen dritten Bildschirm, die Bildschirmdarstellung eines zweiten Bildschirms auf den ersten Bildschirm und die Bildschirmdarstellung des dritten Bildschirms auf den zweiten Bildschirm geschalten wird, während die Bildschirmdarstellung auf einem vierten Bildschirm unverändert verbleibt.

In vorteilhafter Weiterbildung der Erfindung ist dabei die Umschalteinrichtung derart ausgebildet, dass die Bildschirmdarstellungen während eines laufenden Spiels und dessen Darstellung zwischen den Bildschirmen hin- und herschaltbar sind. Hierdurch kann die Spielattraktivität des Spielautomaten beträchtlich erhöht werden. Insbesondere kann durch eine solchermaßen ausgebildete Umschalteinrichtung ein Spiel während seiner spannenden Phasen auf einen von dem Spieler präferierten Bildschirm, z. B. auf einen Zentralbildschirm, geschalten werden, während das Spiel in seinen weniger spannenden Spielphasen auf einen anderen, vielleicht weniger präferierten Bildschirm gelegt wird. Hierbei kann wechselweise ein anderes Spiel, das sich vielleicht gerade in einer spannenderen Phase befindet, wiederum auf den Hauptbildschirm geschalten werden. Hierdurch kann ein Spieler stets das jeweils spannendste Spiel auf den von ihm präferierten Bildschirm schalten, während andere Spiele auf anderen, weniger präferierten Bildschirmen weiterlaufen.

Vorteilhafterweise ist die Umschalteinrichtung hierbei unterbrechungsfrei arbeitend ausgebildet, so dass ein Spiel ungeachtet eines Umschaltens der Bildschirmdarstellung unterbrechungsfrei weiterläuft. Ohne den Spielablauf zu unterbrechen, wird die Darstellung eines Spiels zunächst auf dem einen Bildschirm angezeigt und nach Betätigung der Umschalteinrichtung sodann auf dem anderen Bildschirm dargestellt und dort fortgeführt.

In vorteilhafter Weiterbildung der Erfindung kann das Hin- und Herschalten der Bildschirmdarstellungen von dem einen Bildschirm auf einen anderen Bildschirm und umgekehrt auch automatisch erfolgen. Eine hierzu vorgesehene Umschaltsteuerung betätigt die Umschalteinrichtung automatisch in Abhängigkeit von einer vorbestimmten Betriebsbedingung des Spiel- und/oder Wettautomaten.

Das automatische Umschalten der Bildschirmdarstellungen zwischen den verschiedenen Bildschirmen kann hierbei in Abhängigkeit von verschiedenen Betriebsbedingungen erfolgen. Nach einer einfachen Ausführung der Erfindung kann das Umschalten der Bildschirmdarstellungen beispielsweise zeitgesteuert erfolgen, beispielsweise dahingehend, dass nach Ablauf einer vorbestimmten Zeitspanne beispielsweise beginnend mit dem Start eines Spieles die Bildschirmdarstellung automatisch umgeschalten wird.

Bevorzugt ist jedoch eine Ausbildung der Umschaltsteuerung, die das automatische Umschalten der Bildschirmdarstellungen von dem einen auf den anderen Bildschirm in Abhängigkeit des Spielablaufs und/oder des Eintritts einer charakteristischen Spielsituation und/oder Spielbedingung eines auf einem der Bildschirme dargestellten Spiels veranlasst, insbesondere bei Auftreten einer vorbestimmten Spielsituation und/oder Spielbedingung, die durch ein bestimmtes Spielsteuerungssignal gekennzeichnet sein kann. Beispielsweise kann die automatische Umschaltsteuerung auf eine von dem Spiel ausgegebene Eingabeaufforderung reagieren, insbesondere dann, wenn diese auf einem für den Spieler schlechter einsehbaren, schlechter erreichbaren und/oder weniger präferierten Bildschirm dargestellt ist. Wird beispielsweise bei einem Touchscreen-Gerät auf einem für den Spieler weniger gut erreichbaren Bildschirm eine Eingabeaufforderung ausgegeben, kann die Umschaltsteuerung automatisch diese Bildschirmdarstellung auf den für den Spieler besser erreichbaren Bildschirm schalten, so dass dieser ergonomisch günstiger das entsprechende Touchscreen-Feld erreichen kann. Alternativ oder zusätzlich kann eine automatische Bildschirmdarstellungsumschaltung auch bei anderen Spielsituationen, wie beispielsweise bei Eintreten einer Spielendphase, erfolgen, beispielsweise dahingehend, dass ein in die Endphase gehendes Spiel auf den Hauptbildschirm des Spielgeräts geschaltet wird. Alternativ oder zusätzlich kann die automatische Bildschirmumschaltung auch vorübergehend erfolgen, beispielsweise dann, wenn ein auf einen schlechter einsehbaren Bildschirm gelegtes Spiel gerade in seine spannende Phase eintritt, beispielsweise ein Walzenspiel sich zeitlich in einem vorbestimmten Zeitfenster dem Anhalten der Walzen nähert.

Die manuelle Betätigung der Umschalteinrichtung kann grundsätzlich verschieden erfolgen. In Weiterbildung der Erfindung kann die hierfür vorgesehene Eingabevorrichtung eine Betätigungstaste zum Betätigen der Umschalteinrichtung durch Tastendruck, -berührung und/oder -annäherung aufweisen. Insbesondere kann hierbei eine mechanische Drucktaste und/oder eine graphische Touchscreentaste Verwendung finden. Die Betätigungstaste ist dabei vorteilhafterweise in dem Bedienfeld des Spiel- bzw. Wettautomaten angeordnet und zur Handbetätigung vorgesehen. Alternativ oder zusätzlich kann die Betätigungstaste jedoch auch als Fußpedal, Kniepedal oder durch ein anderes Körperteil zu betätigendes Pedal ausgebildet sein, das unmittelbar am Gehäuse des Spiel- bzw. Wettautomaten angeordnet oder auch hiervon beabstandet nach Art eines Fernsteuermoduls vorgesehen sein kann.

Alternativ oder zusätzlich zu einer taktil arbeitenden Betätigungstaste kann die Eingabevorrichtung auch berührungslos arbeitend ausgebildet sein, vorzugsweise einen Bewegungssensor zur Erfassung einer Körpergliedbewegung, insbesondere einer Handbewegung, zum Betätigen der Umschaltvorrichtung durch Handbewegung aufweisen. Beispielsweise kann ein Bewegungssensor in Form einer Lichtschranke vorgesehen sein, die bereits die Annäherung einer Hand an die Eingabevorrichtung erfasst und das Umschalten auslöst. Beispielsweise kann mittels eines geeigneten Bewegungssensors eine kippende Handrückenbewegung nach Art eines Umblätterns erfasst werden. Selbstverständlich sind andere berührungslos arbeitende Eingabesensoren ebenfalls möglich.

Alternativ oder zusätzlich kann auch ein akustisches Eingabemittel zur Betätigung der Umschaltvorrichtung durch Sprache und/oder Ton vorgesehen sein, das beispielsweise ein Pfeifen oder ein Händeklatschen erkennen und bei Erfassung des entsprechenden Tons bzw. der entsprechenden Tonfolge das Umschalten der Bildschirmdarstellung zwischen den Bildschirmen in der vorgenannten Weise auslösen kann.

In Weiterbildung der Erfindung besitzt die Eingabevorrichtung verschiedene Betätigungsmodi zum Betätigen der Umschalteinrichtung in verschiedenen Schaltrichtungen und/oder in verschiedenen Schaltarten. Insbesondere kann die Eingabevorrichtung in verschiedener Weise betätigt werden, um verschiedene Umschaltvorgänge auszulösen. Nach einer vorteilhaften Ausführung der Erfindung kann vorgesehen sein, dass bei einem einfachen Betätigen der Eingabevorrichtung die Bildschirmdarstellungen in eine vorbestimmte Richtung weitergeschaltet werden, beispielsweise die zunächst auf einem ersten Bildschirm dargestellte Bildschirmdarstellung auf einen zweiten Bildschirm, die zunächst auf dem zweiten Bildschirm dargestellte Bildschirmdarstellung auf den dritten Bildschirm etc. Wird hingegen die Eingabevorrichtung mehrfach betätigt, insbesondere nach Art eines Doppelklicks einer Computermaus, kann ein Umschalten der Bildschirmdarstellungen in einer zweiten, der ersten entgegengesetzten Richtung erfolgen und/oder eine voreingestellte Zuordnung der Bildschirmdarstellungen zu den verschiedenen Bildschirmen wieder hergestellt werden, beispielsweise dahingehend, dass unabhängig von den zuvor durchgeführten Umschaltvorgängen ein Hauptspiel wieder auf einen Hauptbildschirm und ein Nebenspiel und/oder Zusatzinformationen auf einen Zusatzbildschirm geschaltet werden.

Alternativ oder zusätzlich zu einem mehrfachen Betätigen desselben Eingabemittels wie dem genannten Doppelklick können verschiedene Umschaltvorgänge auch durch Betätigen verschiedener Eingabemittel ausgelöst werden. Insbesondere kann in vorteilhafter Weiterbildung der Erfindung vorgesehen sein, dass ein erster Umschaltvorgang durch Betätigen eines ersten Eingabemittels und ein zweiter Umschaltvorgang durch Betätigen eines zweiten Eingabemittels ausgelöst wird, wobei es wiederum besonders vorteilhaft sein kann, den zweiten Umschaltvorgang durch gemeinsames Betätigen des ersten und des zweiten Eingabemittels auszulösen. Bei Ausbildung der Eingabemittel in Form von Betätigungstasten kann insbesondere vorgesehen sein, dass ein erster Umschaltvorgang durch einfaches Drücken der Umschalttaste ausgelöst wird, während ein zweiter Umschaltvorgang, beispielsweise ein Rückwärtsschalten der Bildschirmdarstellungen, durch Drücken einer Tastenkombination, vorzugsweise gleichzeitiges Drücken der Umschalttaste zusammen mit einer weiteren Bedientaste, ausgelöst werden kann.

Alternativ oder zusätzlich zu einer solchen Einfach- und Mehrfachbetätigung kann die Betätigungseinrichtung selbst auch mehrere Betätigungsrichtungen aufweisen, beispielsweise nach Art eines Steuerknüppels, der nach vorne und nach hinten gekippt werden kann, um die Bildschirmdarstellungen in Vorwärtsrichtung von einem ersten Bildschirm auf einen zweiten Bildschirm etc. sowie rückwärts von einem zweiten Bildschirm auf einen ersten Bildschirm etc. umschalten zu können.

Nach einer vorteilhaften Ausführung der Erfindung besitzt der Spiel- bzw. Wettautomat eine von der Umschalteinrichtung ansteuerbare, vorzugsweise akustisch ausgebildete Anzeigevorrichtung, mittels derer ein Umschalten der Bildschirmdarstellungen in der vorgenannten Weise akustisch angezeigt wird und somit von einem Gerätebenutzer nicht nur durch Erfassen der umspringenden Bildschirmdarstellungen selbst, sondern zusätzlich auch durch das ergänzend abgegebene Anzeigesignal erfasst werden kann, beispielsweise auch dann, wenn der Gerätebenutzer die Bildschirme gerade nicht beobachtet. Bevorzugt ist hierbei die Abgabe eines akustischen Anzeigesignals. Alternativ oder zusätzlich können jedoch auch anders ausgebildete Anzeigesignale Verwendung finden, beispielsweise kann auf eine vom Spieler üblicherweise belegte Spielsteuertaste ein Vibrationsalarm gegeben werden, der beim Umschalten der Bildschirmdarstellungen abgegeben wird.

In Weiterbildung der Erfindung gibt die Anzeigevorrichtung dabei unterschiedliche Anzeigesignale für unterschiedliche Umschaltvorgänge ab, so dass die jeweiligen Umschaltvorgänge anhand des abgegebenen Anzeigesignals individuell erkennbar sind. Wird beispielsweise in der vorgenannten Weise ein akustisches Anzeigesignal abgegeben, kann ein je nach Umschaltvorgang in der Tonhöhe unterschiedlich variierendes Anzeigesignal abgegeben werden. Beispielsweise kann bei einem Nachobenschalten der Bildschirmdarstellung des Hauptspiels auf einem weiter oben angeordneten Bildschirm ein höherer Ton oder eine nach oben gehende Tonfolge abgegeben werden, die sozusagen akustisch das Nachobenschalten anzeigt, während umgekehrt bei einem Herunterholen der Bildschirmdarstellung des (Haupt-) Spiels auf den unteren Bildschirm ein tieferer Ton und/oder eine nach unten gehende Tonfolge abgegeben wird.

Die Umschalteinrichtung kann grundsätzlich an verschiedenen Stellen der Geräte- und Bildschirmsteuerung und der zugehörigen Signalübertragungskreise eingreifen, um in der gewünschten Weise die Bildschirmdarstellungen zwischen den Bildschirmen des Spiel- bzw. Wettautomaten hin und her zu schalten. Um ein besonders schnelles Umschalten zu erreichen, kann erfindungsgemäß die Umschalteinrichtung den oder mehrere Graphikcontroller manipulieren, durch den bzw. die die Bildschirme angesteuert werden. Durch die entsprechenden, der Umschalteinrichtung zugehörigen Manipulationsmittel kann sozusagen die Hardware des Geräts für die Bildschirmsteuerung elektronisch manipuliert werden, wobei in dem jeweiligen Graphikcontroller festgelegte Signalpfade und/oder Speicherzugriffsadressen von der Umschalteinrichtung geswapt bzw. zyklisch vertauscht werden, wodurch die Bildschirmdarstellungen auf andere Bildschirme geschaltet werden.

Zusätzlich kann die Umschalteinrichtung auch Programmsteuermittel zur softwaretechnischen Veränderung des in einer zentralen Steuereinheit exekutierten Steuerprogramms und/oder Mittel zur Veränderung der Daten bzw. Dateninhalte umfassen, welche die Bildschirmanzeige softwaretechnisch steuern. Die Umschalteinrichtung kann also auch auf softwaretechnischer Ebene das Umschalten der Bildschirmdarstellungen bewirken.

Alternativ oder zusätzlich kann erfindungsgemäß auch vorgesehen sein, dass die Umschalteinrichtung eine Signal- bzw. Schaltweiche aufweist, vorzugsweise ein Switch Board, das im Signalpfad bzw. den Signalpfaden zwischen dem vorgenannten Graphikcontroller und den davon angesteuerten Bildschirmen angeordnet ist. Durch Umschalten der Signalweiche werden die Signalpfade zwischen dem Graphikcontroller und den Bildschirmen vertauscht, wodurch die jeweilige Bildschirmdarstellung auf einen anderen als den vom Graphikcontroller an sich vorgesehenen Bildschirm gegeben wird.

Das Umschalten der Bildschirmanzeigen kann grundsätzlich verschiedene Bereiche der Bildschirme erfassen. In vorteilhafter Weiterbildung der Erfindung wird dabei jeweils die gesamte Bildschirmdarstellung erfasst, d.h. die gesamte auf der Fläche eines Bildschirms angezeigte Bildschirmdarstellung wird von dem einen Bildschirm auf den anderen Bildschirm und umgekehrt geschaltet.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine perspektivische Frontansicht eines elektronischen Glücksspielautomaten mit zwei übereinander angeordneten, zueinander stumpfwinklig angeordneten Bildschirmen, auf denen mehrere Spiele gleichzeitig und/oder ein Spiel sowie Zusatzinformationen anzeigbar sind,
- Fig. 2:: eine perspektivische Frontansicht des Glücksspielautomaten aus Fig. 1, wobei im Vergleich zu Figur 1 die Bildschirmdarstellung des unteren Bildschirms auf den oberen Bildschirm und die Bildschirmdarstellung des oberen Bildschirms auf den unteren Bildschirm geschalten wurde, und

- Fig. 3:: eine schematische, vereinfachte Darstellung der Geräte- und Bildschirmsteuerung und der dieser zugeordneten Umschalteinrichtung zum Umschalten der Bildschirmdarstellungen.

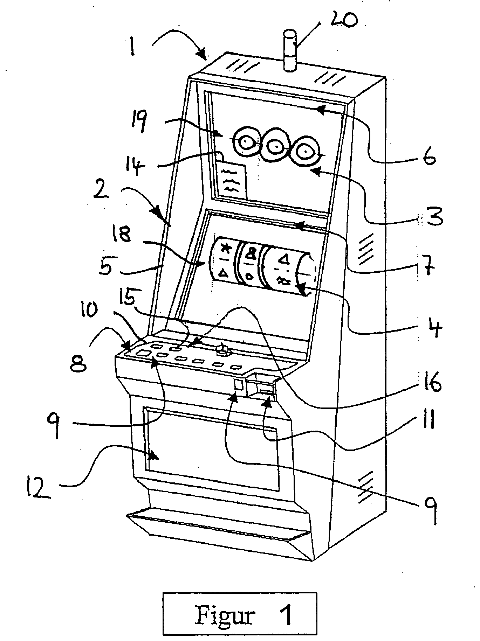

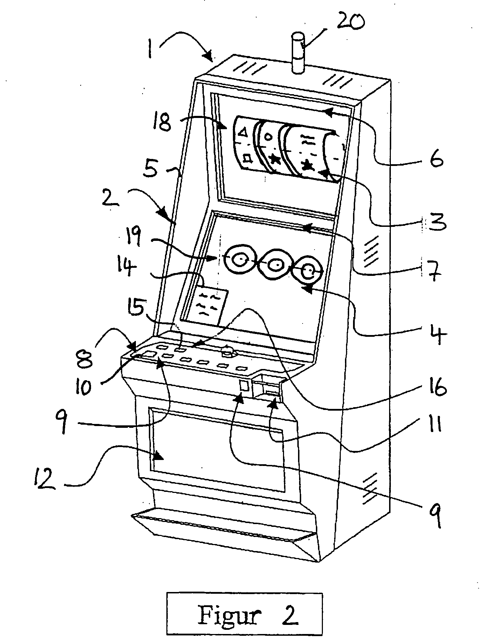

Das in den Figuren 1 und 2 gezeichnete Spielgerät bildet ein Standgerät und umfasst ein etwa mannshohes, grob gesprochen kastenförmiges Gerätegehäuse 1, dessen obere Hälfte der Aufnahme einer Anzeigevorrichtung 2 dient, die in der gezeichneten Ausführung aus zwei großflächigen, übereinander angeordneten Bildschirmen 3 und 4 besteht, wobei es sich versteht, dass auch mehr als zwei Bildschirme vorgesehen sein könnten. Wie Figur 1 zeigt, besitzt das Spielgerätegehäuse 1 in seiner Frontseite 5 zwei Ausschnitte 6 und 7, die zueinander einen stumpfen Winkel einschließen, so dass die übereinander angeordneten Bildschirme 3 und 4 zueinander ebenfalls stumpfwinklig um eine liegende Achse zueinander gekippt sind. In Weiterbildung der Erfindung kann das Spielgerät auch als Slant-Top-Gerät ausgebildet sein.

Unterhalb der beiden Bildschirme 3 und 4 besitzt das Spielgerätegehäuse 1 einen zum Spieler hin vorspringenden Bedienfeldabschnitt 8, der sich in der gezeichneten Ausführung über die gesamte Breite des Gerätegehäuses 1 erstreckt und im wesentlichen kastenförmig ausgebildet ist. Die Oberseite des Bedienfeldabschnitts 8 ist etwa eben ausgebildet und beherbergt das Bedienfeld 10, welches mehrere von Hand zu betätigende Bedientasten 9 in Form von Druckschaltern umfasst. In der gezeichneten Ausführung sind die Bedientasten 9 mechanische Schalter, es versteht sich jedoch, dass die Bedientasten 9 auch nach anderen Wirkprinzipien betätigbar sein können, insbesondere Teil eines Touchscreens sein können. In an sich bekannter Weise kann der Bedienfeldabschnitt 8 weiterhin eine Geldeingabe- und/oder -ausgabeeinheit 11 umfassen, die in an sich bekannter Weise verschieden ausgebildet sein kann und beispielsweise neben einem Münzen- und Geldscheinmodul auch ein Token- und/oder Ticketmodul oder ein elektronisches Kartenlese- und Schreibgerät umfassen kann, so dass der Spielautomat münzen- und geldwertmäßig betätigbar ist.

Die auf den Bildschirmen 3 und 4 angezeigten Spiele werden von einer elektronischen Steuereinrichtung 12 vorzugsweise in Form eines zumindest eine CPU aufweisenden Rechners gesteuert, die im Inneren des Gerätegehäuses 1 in dessen unteren Hälfte aufgenommen ist. Die Steuereinrichtung 13 steuert dabei einerseits die Anzeigevorrichtung 2 an und kommuniziert andererseits mit den Bedientasten 9 des Bedienfeldes 10 sowie der Geldeingabe- und/oder Ausgabeeinheit 11.

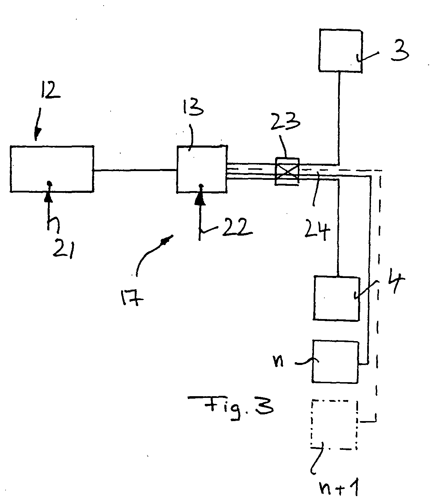

Wie Figur 3 zeigt, ist der eigentlichen Steuereinrichtung 12 dabei ein oder mehrere Graphikcontroller 13 nachgeschaltet, der mit den beiden Bildschirmen 3 und 4 kommuniziert und diese steuert.

Bei der in den Figuren gezeichneten Ausführung können auf den beiden Bildschirmen 3 und 4 jeweils verschiedene Spiele angezeigt werden, die von der Steuereinrichtung 12 gleichzeitig, zeitversetzt und/oder nacheinander ausgeführt werden können, wobei in der gezeichneten Ausführung nach Figur 1 auf dem unteren Bildschirm 4 ein Walzenspiel dargestellt wird, während auf dem oberen Bildschirm 3 ein Dart-Spiel sowie in einem Zusatz- bzw. Pop-Up-Fenster 14 Zusatzinformationen dargestellt sind, die automatisch temporär oder permanent eingeblendet sein oder durch eine Informationstaste des Bedienfeldabschnitts 8 aufgerufen werden können. Die dargestellten Spiele können automatisch ablaufen und/oder durch die in dem Bedienfeldabschnitt 8 vorgesehenen Bedientasten gesteuert werden, die beispielsweise Bedientasten zum Erhöhen des Spieleinsatzes, zum Anhalten, Abbremsen oder Beschleunigen der rotierenden Spielwalzen des Walzenspiels oder andere Bedientasten zum Steuern weiterer Spielfunktionen umfassen können.

Insbesondere ist in dem Bedienfeldabschnitt 8 eine Umschalttaste 15 einer Eingabeeinrichtung 16 vorgesehen, mittels derer eine Umschalteinrichtung 17 zum Umschalten der Bildschirmdarstellungen auf den Bildschirmen 3 und 4 betätigt werden kann. Wird die Umschalttaste 15 gedrückt, wird die Bildschirmdarstellung 18, die nach einem voreingestellten Setup auf dem unteren Bildschirm 4 angezeigt wird, auf den oberen Bildschirm 3 geschaltet, während gleichzeitig die an sich für den oberen Bildschirm 3 vorgesehene Bildschirmdarstellung 19 auf den unteren Bildschirm 4 geschalten wird. Das vorbestimmte Setup der Bildschirmdarstellungen kann dabei verschieden ausgebildet sein, nach einer vorteilhaften Ausführung der Erfindung jedoch dahingehend getroffen sein, dass ein Hauptspiel - in der gezeichneten Ausführung das Walzenspiel - auf dem Hauptbildschirm - in der gezeichneten Ausführung der untere Bildschirm 4 - dargestellt wird, während ein Nebenspiel - in der gezeichneten Ausführung das Dart-Spiel - und ggf. Zusatzinformationen auf einem Nebenbildschirm - in der gezeichneten Ausführung der obere Bildschirm 3 - dargestellt sind. Durch Betätigen der Umschalteinrichtung 17 kann dieses voreingestellte Setup umgedreht werden.

Vorteilhafterweise kann der genannte Umschaltvorgang durch eine Anzeigevorrichtung 20 zusätzlich zu dem visuell erfassbaren Umschalten der Bildschirmdarstellungen angezeigt werden, wobei in der gezeichneten Ausführung eine visuelle und akustische Anzeigevorrichtung 20 vorgesehen ist, die beim Umschalten der Bildschirmdarstellungen einerseits ein blinkendes Licht und andererseits eine vorbestimmte Tonfolge abgibt, sobald die Bildschirmdarstellungen umgeschalten werden.

Wie Figur 3 zu erkennen gibt, kann das Umschalten der Bildschirmdarstellungen auf verschiedenen Ebenen der Gerätesteuerung bewirkt werden. Die Umschalteinrichtung 17 kann softwaretechnisch realisiert sein und die die Gerätesoftware exekutierende Komponente, insbesondere den zentralen Steuerungsteil der Steuereinheit 12 softwaretechnisch manipulieren und/oder die dabei verwendeten Daten bzw. Dateninhalte manipulieren, um die veränderten Bildschirmanzeigen zu bewirken. Dies ist in Figur 3 durch den Pfeil 21 symbolisiert. In besonders vorteilhafter Weiterbildung der Erfindung kann die Umschalteinrichtung 17 auch Manipulationsmittel 22 zur elektronischen Manipulation des bzw. der ggf. vorgesehenen mehreren Graphikcontroller 13 umfassen, durch die die im Graphikcontroller 13 vorbestimmten Signalpfade und/oder Speicheradressen geswapt bzw. zyklisch vertauscht werden. Alternativ kann die Umschalteinrichtung 17 auch eine Signalweiche in Form eines Switch Boards aufweisen, das in die Signalpfade zwischen dem Graphikcontroller 13 und den beiden Bildschirmen 3 und 4 geschalten ist und je nach Weichenstellung die Signale des Graphikcontrollers auf die beiden Bildschirme 3 und 4 vertauscht.

Vorteilhafterweise kann die Umschalteinrichtung 17 und/oder die Eingabeeinrichtung 16 in verschiedenen Betriebsmodi betätigt werden. In der gezeichneten Ausführung ist dabei vorgesehen, dass durch einmaliges Betätigen der Umschalttaste 15 die gesamte Bildschirmdarstellung 18 des unteren Bildschirms 4 auf den oberen Bildschirm 3 und die gesamte Bildschirmdarstellung 19 des oberen Bildschirms 3 auf den unteren Bildschirm 4 geschalten wird. Figur 2 zeigt das Ergebnis dieses vollständigen Umschaltvorgangs, bei dem auch das vorgenannte Zusatzfenster 14 mit auf den anderen Bildschirm geschalten wurde.

Vorteilhafterweise kann jedoch auch nur ein Teil der Bildschirmdarstellungen auf den nächsten Bildschirm geschalten werden. Insbesondere kann durch Mehrfachklicken der Umschalttaste 15 und/oder durch Betätigen der Umschalttaste 15 zusammen mit einer weiteren Steuertaste nach Art eines Doppelklicks einer Computermaus das die Bildschirmflächen nur teilweise belegende Zusatzfenster 14 von dem oberen Bildschirm 3 auf den unteren Bildschirm 4 und umgekehrt geschalten werden. Das Zusatzfenster 14 kann an sich dabei durch eine separate Informationstaste auf zunächst den oberen Bildschirm 3 geholt werden. Alternativ oder zusätzlich kann auch die Umschalttaste 15 dahingehend belegt sein, dass bei dem ersten Doppelklick das Zusatzfenster 14 auf den oberen Bildschirm 3 geholt wird, und mit dem zweiten Doppelklick dann auf den unteren Bildschirm 4 geholt und mit weiteren Doppelklickbetätigungen wieder auf den oberen Bildschirm 3 zurückgeschaltet und/oder ganz weggeschalten wird.

Durch nochmaliges Betätigen der Umschalttaste 15 im jeweiligen Betriebsmodus können die Bildschirmdarstellungen 18, 19 sowie das Zusatzfenster 14 wieder zurück auf den jeweiligen Ausgangsbildschirm geschaltet werden.

## Patentansprüche

1. Elektronischer Spiel- und/oder Wettautomat, insbesondere münz- und/oder geldwertmäßig betätigbarer Glücksspielautomat, mit einer Anzeigevorrichtung (2) zur Anzeige von zumindest einem Spiel und ggf. zusätzlicher Informationen, wobei die Anzeigevorrichtung (2) zumindest einen ersten und einen zweiten Bildschirm (3, 4) aufweist, auf denen zumindest eine erste Bildschirmdarstellung (18), vorzugsweise ein Hauptspiel, und eine zweite Bildschirmdarstellung (19), vorzugsweise ein Zusatzspiel und/oder Zusatzinformationen, anzeigbar sind, wobei eine Steuereinrichtung (12) zum Steuern der auf den Bildschirmen (3, 4) angezeigten Spiele und Informationen und zumindest ein der Steuereinrichtung (12) nachgeschalteter Graphikcontroller (13) zum Ansteuern der genannten Bildschirme (3, 4) mit den Bildschirmdarstellungen vorgesehen sind, sowie einem Bedienfeld zur Betätigung des Spiel- und/oder Wettautomaten, **dadurch gekennzeichnet, dass** eine Umschalteinrichtung (17), die durch eine Eingabeeinrichtung (16) von einem Gerätebenutzer betätigbar ist, zum Umschalten der ersten Bildschirmdarstellung (18) von dem ersten Bildschirm (4) auf den zweiten Bildschirm (3) sowie der zweiten Bildschirmdarstellung (19) von dem zweiten Bildschirm (3) auf den ersten oder einen weiteren Bildschirm (4) und/oder umgekehrt vorgesehen ist, wobei die Umschalteinrichtung (17) Manipulationsmittel (22) zum Vertauschen der Speicheradressen, die in dem zumindest einen Graphikcontroller (13) festgelegt sind, oder eine schaltbare Signalweiche zum Umschalten der Signalpfade zwischen dem zumindest einen Graphikcontroller (13) und den davon angesteuerten Bildschirmen (3, 4) aufweist.

2. Spiel- und/oder Wettautomat nach dem vorhergehenden Anspruch, wobei die Anzeigevorrichtung (2) drei oder mehr Bildschirme (3, 4, n) umfasst und die Bildschirmdarstellungen durch die Umschaltvorrichtung (17) zwischen den drei oder mehr Bildschirmen (3, 4, n) hin- und herschaltbar sind.

3. Spiel- und/oder Wettautomat nach einem der vorhergehenden Ansprüche, wobei die Umschalteinrichtung (17) derart ausgebildet ist, dass die Bildschirmdarstellungen (18, 19) zwischen den Bildschirmen (3, 4) während eines laufenden Spiels und dessen Darstellung auf einem Bildschirm (3, 4) hin- und herschaltbar sind, wobei die Umschalteinrichtung (17) spielunterbrechungsfrei arbeitend ausgebildet ist.

4. Spiel- und/oder Wettautomat nach einem der vorhergehenden Ansprüche, wobei eine Umschaltsteuerung zur automatischen Betätigung der Umschalteinrichtung (17) in Abhängigkeit von einer vorbestimmten Betriebsbedingung des Spiel- und/oder Wettautomaten vorgesehen ist.

5. Spiel- und/oder Wettautomat nach dem vorhergehenden Anspruch, wobei die Umschaltsteuerung in Abhängigkeit des Spielablaufs eines auf einem der Bildschirme (3, 4) dargestellten Spiels, insbesondere bei Auftreten einer vorbestimmten Spielsituation und/oder Spielbedingung wie einer Eingabeaufforderung, einem Spielergebnis und/oder einer Spielendphase und/oder einem Spielneustart, arbeitet.

6. Spiel- und/oder Wettautomat nach einem der vorhergehenden Ansprüche, wobei die Eingabeeinrichtung (16) eine Betätigungstaste (15), insbesondere eine Drucktaste und/oder eine Touchscreen-Taste, zum Betätigen der Umschalteinrichtung (17) durch Tastenbetätigung und/oder -berührung aufweist.

7. Spiel- und/oder Wettautomat nach einem der vorhergehenden Ansprüche, wobei die Eingabevorrichtung (16) einen Bewegungssensor zur Erfassung einer Körpergliedbewegung, insbesondere Handbewegung, zum Betätigen der Umschalteinrichtung (17) durch Handbewegung aufweist.

8. Spiel- und/oder Wettautomat nach einem der vorhergehenden Ansprüche, wobei die Eingabevorrichtung (16) akustische Eingabemittel zur Betätigung der Umschalteinrichtung (17) durch Sprache und/oder Ton aufweist.

9. Spiel- und/oder Wettautomat nach einem der vorhergehenden Ansprüche, wobei die Eingabevorrichtung (16) verschiedene Betätigungsmodi zum Betätigen der Umschalteinrichtung (17) in verschiedenen Schaltrichtungen und/oder verschiedenen Umschaltmodi aufweist, wobei die Eingabevorrichtung (16) derart ausgebildet ist, dass ein Betätigen der Eingabevorrichtung (16) in einem ersten Betätigungsmodus ein Umschalten der Umschalteinrichtung (17) in einer ersten Umschaltrichtung auslöst und ein Betätigen der Eingabevorrichtung (16) in einem zweiten Betätigungsmodus ein Umschalten in einer zweiten, von der ersten Umschaltrichtung abweichenden Umschaltrichtung .

10. Spiel- und/oder Wettautomat nach dem vorhergehenden Anspruch, wobei der erste Betätigungsmodus durch ein einfaches Betätigen eines Eingabemittels der Eingabevorrichtung (16) und der zweite Betätigungsmodus durch ein mehrfaches Betätigen des genannten Eingabemittels, insbesondere ein Doppelklicken, auslösbar ist, und/oder wobei der erste Betätigungsmodus durch Betätigen eines ersten Eingabemittels der Eingabevorrichtung (16) und der zweite Betätigungsmodus durch Betätigen eines zweiten Eingabemittels der Eingabevorrichtung (16) auslösbar ist, wobei vorzugsweise der zweite Betätigungsmodus durch Betätigen des ersten Eingabemittels zusammen mit dem zweiten Eingabemittel, insbesondere Drücken einer Tastenkombination, auslösbar ist.

11. Spiel- und/oder Wettautomat nach einem der vorhergehenden Ansprüche, wobei eine von der Umschalteinrichtung (17) ansteuerbare, vorzugsweise akustische Anzeigevorrichtung (20) zur Anzeige eines Umschaltvorgangs der Bildschirmdarstellungen (18, 19) zusätzlich zu den genannten Bildschirmen (3, 4) vorgesehen ist, wobei die Anzeigevorrichtung (20) unterschiedliche Anzeigesignale für unterschiedliche Umschaltvorgänge, vorzugsweise für jeden Umschaltgang ein jeweils individuelles Anzeigesignal, abgibt, wobei vorzugsweise die Anzeigesignale der Anzeigevorrichtung (20) in der Tonhöhe variierende Akustiksignale umfassen.

## Claims

1. An electronic gaming and/or gambling machine, in particular a slot machine which is coin operable or is operable by monetary equivalents, comprising a display apparatus (2) for the display of at least one game and optionally additional information, with the display apparatus (2) having at least a first and a second screen (3, 4) on which at least one first screen representation (18), preferably a main game, and one second screen representation (19), preferably a bonus game and/or additional information, can be displayed, wherein a control device (12) for controlling the games and information displayed on the screens (3, 4) and at least one graphics controller (13) arranged downstream the control device (12) for controlling the named screens (3, 4) with the screen representation are provided, as well as with an operating panel for actuating the gaming and/or gambling machine, **characterized in that** a switching device (17) is provided, which is actuable by a machine user by an input device (16) for the switching of the first screen representation (18) from the first screen (4) to the second screen (3) as well as of the second screen representation (19) from the second screen (3) to the first or further screen (4) and/or vice versa, wherein the switching device (17) comprises manipulating means (22) for switching the storage addresses, which are set in the at least one graphics controller (13), or a switchable signal separation circuit for switching the signal paths between the at least one graphics controller (13) and the screens (3, 4) actuated therewith.

2. A gaming and/or gambling machine in accordance with the preceding claim, wherein the display apparatus (2) includes three or more screens (3, 4, n) and the screen representations can be switched to and fro between the three or more screens (3, 4, n) by the switching apparatus (17).

3. A gaming and/or gambling machine in accordance with one of the preceding claims, wherein the switching apparatus (17) is configured such that the screen representations (18, 19) can be switched to and fro between the screens (3, 4) during a running game and its representation on a screen (3, 4), wherein the switching device (17) is configured to operate without interrupting the game.

4. A gaming and/or gambling machine in accordance with one of the preceding claims, wherein a switching control for automatic actuation of the switching device (17) is provided depending on a predefined operating condition of the gaming and/or gambling machine.

5. A gaming and/or gambling machine in accordance with the preceding claim, wherein the switch control operates in dependence on the game course of a game shown on one of the screens (3, 4), in particular upon occurrence of a predetermined game situation and/or game condition such as an input request, a game result and/or an end phase of a game and/or a restart of the game.

6. A gaming and/or gambling machine in accordance with one of the preceding claims, wherein the input device (16) has an actuation button (15), in particular a push button and/or a touch screen button, for the actuation of the switching device (17) by actuating and/or touching the button.

7. A gaming and/or gambling machine in accordance with one of the preceding claims, wherein the input apparatus (16) has a movement sensor for the detection of a movement of a part of the body, in particular a hand movement, for the actuation of the switching device (17) by hand movement.

8. A gaming and/or gambling machine in accordance with one of the preceding claims, wherein the input apparatus (16) has acoustic input means for the actuation of the switching device (17) by voice and/or sound.

9. A gaming and/or gambling machine in accordance with one of the preceding claims, wherein the input apparatus (16) has different actuation modes for the actuation of the switching device (17) in different switching directions and/or in different switching modes, wherein the input device (16) is configured such that an actuation of the input device (16) in a first actuation mode triggers a switching of the switching device (17) in a first actuation direction, and an actuation of the input device (16) in a second actuation mode triggers a switching in a second switching direction deviating from the first switching direction.

10. A gaming and/or gambling machine in accordance with the preceding claim, wherein the first actuation mode can be triggered by a simple actuation of an input means of the input apparatus (16) and the second actuation mode can be triggered by a multiple actuation of the named input means, in particular by a double click, and/or wherein the first actuation mode can be triggered by actuating a first input means of the input device (16) and the second actuating mode can be triggered by actuating a second input means of the input device (16), wherein preferably the second actuation mode can be triggered by actuating the first input means together with the second input means, in particular by pressing a shortcut.

11. A gaming and/or gambling machine in accordance with one of the preceding claims, wherein an indication apparatus (20) controllable by the switching device (17) and preferably acoustic is provided for the indication of a switching process of the screen representations (18, 19) in addition to the named screens (3, 4), wherein the display device (20) outputs different indication signals for different switching procedures, preferably in each case one individual indication signal for each switching process, wherein the indication signals of the indication apparatus (20) preferably include acoustic signals varying in the tone level.

## Revendications

1. Machine de jeux et/ou de paris électronique, notamment machine de jeux de chance actionnable par pièces de monnaie et/ou par valeur pécuniaire, comprenant un dispositif d'affichage (2) pour l'affichage d'au moins un jeu et, le cas échéant, d'informations supplémentaires, le dispositif d'affichage (2) présentant au moins un premier et un deuxième écrans (3, 4) sur lesquels au moins une premier affichage écran (18), de préférence un jeu principal, et un deuxième affichage écran (19), de préférence un jeu complémentaire, et/ou des informations complémentaires peuvent être affichés, un dispositif de commande (12), destiné à commander les jeux et les informations affichés sur les écrans (3, 4), et au moins un contrôleur graphique (13) installé en aval du dispositif de commande (12), destiné à commander lesdits écrans (3, 4) avec les affichages écran étant ménagés, et comprenant un champ de commande pour actionner les machines de jeux et/ou de paris, **caractérisée en ce qu'**un dispositif de commutation (17), qui est actionnable par un utilisateur d'appareil au moyen d'un dispositif d'entrée (16), est ménagé pour commuter le premier affichage écran (18) du premier écran (4) sur le deuxième écran (3) et pour commuter le deuxième affichage écran (19) du deuxième écran (3) sur le premier ou sur un autre écran (4) et/ou vice versa, le dispositif de commutation (17) présentant des moyens de manipulation (22) pour intervertir les adresses de mémoire qui sont définies dans l'au moins un contrôleur graphique (13), ou présentant un séparateur de signaux destiné à commuter les trajets des signaux entre l'au moins un contrôleur graphique (13) et les écrans (3, 4) qui en sont commandés.

2. Machine de jeux et/ou de paris selon la revendication précédente, le dispositif d'affichage (2) comprenant trois écrans ou plus (3, 4, n) et les affichages écran pouvant être commutés en va-et-vient entre les trois écrans ou plus (3, 4, n) au moyen du dispositif de commutation (17).

3. Machine de jeux et/ou de paris selon l'une quelconque des revendications précédentes, le dispositif de commutation (17) étant réalisé de manière à ce que les affichages écran (18, 19) soient commutables en va-et-vient entre les écrans (3, 4) pendant le déroulement d'un jeu et pendant sa représentation sur un écran (3, 4), le dispositif de commutation (17) étant réalisé de manière à travailler sans interruption du jeu.

4. Machine de jeux et/ou de paris selon l'une quelconque des revendications précédentes, une commande de commutation étant ménagée pour l'actionnement automatique du dispositif de commutation (17) en fonction d'une condition de fonctionnement prédéterminée de la machine de jeux et/ou de paris.

5. Machine de jeux et/ou de paris selon l'une quelconque des revendications précédentes, la commande de commutation travaillant en fonction du déroulement d'un jeu représenté sur l'un des écrans (3, 4), notamment lorsqu'une situation de jeu prédéterminée et/ou une condition de jeu prédéterminée se manifestent, telles qu'une invite de commande, un résultat de jeu et/ou une phase finale de jeu et/ou un nouveau départ de jeu.

6. Machine de jeux et/ou de paris selon l'une quelconque des revendications précédentes, le dispositif d'entrée (16) présentant une touche d'actionnement (15), notamment un bouton-poussoir et/ou une touche tactile, pour actionner le dispositif de commutation (17) par actionnement de touche et/ou effleurement de touche.

7. Machine de jeux et/ou de paris selon l'une quelconque des revendications précédentes, le dispositif d'entrée (16) présentant un capteur de mouvement destiné à capter un mouvement d'un membre, notamment un mouvement de la main, pour actionner le dispositif de commutation (17) par mouvement de la main.

8. Machine de jeux et/ou de paris selon l'une quelconque des revendications précédentes, le dispositif d'entrée (16) présentant des moyens d'entrée acoustiques pour actionner le dispositif de commutation (17) par langage et/ou par son.

9. Machine de jeux et/ou de paris selon l'une quelconque des revendications précédentes, le dispositif d'entrée (16) présentant différents modes d'actionnement pour actionner le dispositif de commutation (17) dans différentes directions de commutation et/ou différents modes de commutation, le dispositif d'entrée (16) étant réalisé de manière à ce qu'un actionnement du dispositif d'entrée (16) dans un premier mode d'actionnement déclenche une commutation du dispositif de commutation (17) dans une première direction de commutation et qu'un actionnement du dispositif d'entrée (16) dans un deuxième mode d'actionnement déclenche une commutation dans une deuxième direction de commutation déviant de la première direction de commutation.

10. Machine de jeux et/ou de paris selon l'une quelconque des revendications précédentes, le premier mode d'actionnement pouvant être déclenché par un simple actionnement d'un moyen d'entrée du dispositif d'entrée (16) et le deuxième mode d'actionnement pouvant être déclenché par un actionnement multiple du dit moyen d'entrée, notamment par un double clic, et/ou le premier mode d'actionnement pouvant être déclenché par actionnement d'un premier moyen d'actionnement du dispositif d'entrée (16) et le deuxième mode d'actionnement par actionnement d'un deuxième moyen d'entrée du dispositif d'entrée (16), de préférence le deuxième mode d'actionnement pouvant être déclenché par actionnement du premier moyen d'entrée en même temps que le deuxième moyen d'entrée, notamment en appuyant sur une combinaison de touches.

11. Machine de jeux et/ou de paris selon l'une quelconque des revendications précédentes, un dispositif d'affichage (20), de préférence acoustique, commandable par le dispositif de commutation (17) étant ménagé pour l'affichage d'une opération de commutation des affichages écran (18, 19) en plus des dits écrans (3, 4), le dispositif d'affichage (20) sortant différents signaux d'affichage pour différentes opérations de commutation, de préférence un signal d'affichage respectivement individuel pour une commutation, de préférence les signaux d'affichage du dispositif d'affichage (20) comprenant des signaux acoustiques variant dans la hauteur de son.
